(19) Europäisches Patentamt
European Patent Office
Office européen des brevets

(11) **EP 2 716 700 B1**

(12) **EUROPEAN PATENT SPECIFICATION**

(45) Date of publication and mention
of the grant of the patent:
**30.03.2016  Bulletin 2016/13**

(51) Int Cl.:
*C08L 9/00* *(2006.01)*            *B60C 1/00* *(2006.01)*
*C08K 3/36* *(2006.01)*            *C08L 7/00* *(2006.01)*
*C08L 15/00* *(2006.01)*           *B60C 11/00* *(2006.01)*

(21) Application number: **12789689.2**

(22) Date of filing: **26.04.2012**

(86) International application number:
**PCT/JP2012/061169**

(87) International publication number:
**WO 2012/160938 (29.11.2012 Gazette 2012/48)**

(54) **RUBBER COMPOSITION FOR TIRES AND PNEUMATIC TIRES**

KAUTSCHUKZUSAMMENSETZUNG FÜR REIFEN UND LUFTREIFEN

COMPOSITION DE CAOUTCHOUC POUR DES PNEUS ET PNEUMATIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **25.05.2011  JP 2011117035
26.03.2012  JP 2012069938**

(43) Date of publication of application:
**09.04.2014  Bulletin 2014/15**

(73) Proprietor: **Sumitomo Rubber Industries, Ltd.
Kobe-shi, Hyogo 651-0072 (JP)**

(72) Inventor: **MIYAZAKI Tatsuya
Kobe-shi
Hyogo 651-0072 (JP)**

(74) Representative: **Manitz, Finsterwald & Partner
GbR
Martin-Greif-Strasse 1
80336 München (DE)**

(56) References cited:
WO-A1-2010/084114       JP-A- 2002 309 038
JP-A- 2010 059 249       JP-A- 2011 046 875
US-A1- 2007 167 555       US-A1- 2008 114 108
US-A1- 2008 149 245       US-A1- 2008 149 248
US-A1- 2010 152 370       US-A1- 2010 197 829
US-B1- 6 184 296       US-B1- 6 399 706
US-B1- 6 403 720

**Description**

TECHNICAL FIELD

The present invention relates to a rubber composition for a tire, and a pneumatic tire formed from the same.

BACKGROUND ART

Cap treads of studless winter-use tires usually have lower hardness (Hs) at low temperatures to comply with micro scale irregularities of iced surfaces, thus ensuring grip performance on ice. Thus, rubber compositions used for studless winter tires contain as a rubber component butadiene rubber with a low glass transition temperature (Tg).

Also, there have been attempts to improve the grip performance on ice of tires by adding Pana-Tetra (zinc oxide), volcanic ash, eggshell powder, crushed walnut, or the like to a rubber composition to improve the scratching effect on ice. Moreover, there have been other attempts to improve the grip performance on ice by adding foamed rubber or aluminum hydroxide to a rubber composition, or forming 3-dimensional sipes on the tread rubber, to absorb a layer of water and improve the adhesion between the tread rubber and ice. However, these methods have the problem of reduced abrasion resistance.

Low abrasion resistance of tires disadvantageously reduces the mileage of the tires. Meanwhile, in recent years, studless winter tires have also been expected to have a longer mileage. Thus, excellent abrasion resistance as well as excellent grip performance on ice are desired for rubber compositions for studless winter tires. Further, excellent handling stability is also desired.

Patent Literature 1 discloses a rubber composition that contains ultrafine rubber powder and thereby has overall excellent grip performance on ice, abrasion resistance, and handling stability. However, the document shows no detailed examination on the glass transition temperature of the ultrafine rubber powder, and there still remains room for improvement in grip performance on ice, abrasion resistance, and handling stability.

US 2008/0149248 A1 discloses a rubber composition for a sidewall comprising (A) 30 to 80 parts by weight of natural rubber, (B) 20 to 70 parts by weight of cis 1,4-polybutadiene rubber, (C) 10 to 100 phr of silica and (D) 1 to 30 phr of a particulate rubber gel filler selected from the group consisting of polybutadiene gel, styrene butadiene gel, acrylonitrile-butadiene gel, chloroprene gel, natural rubber gel, and mixtures thereof, wherein the rubber gel filler has a glass transition temperature of -80 to -10°C.

WO 2010/084114 A1 relates to a rubber composition containing e.g. 96.3 parts by weight of a non functionalized styrene butadiene rubber, 30 parts by weight of a high-cis polybutadiene, 15 parts by weight of a styrene butadiene rubber gel having a glass transition temperature of -15°C and 90 parts by weight of silica. A similar rubber composition is described in US 2010/152370 A1.

US 2010/0197829 A1 relates to a rubber composition, which includes e.g. 110 parts by mass of a styrene butadiene rubber, 20 parts by mass of a polybutadiene, 20 parts by mass of a styrene butadiene rubber gel called micorgel having a glass transition temperature of -15°C and 80 parts by mass of silica. Similar rubber compositions are described in US 2008/0149245 A1 and US 2008/0114108 A1.

CITATION LIST

PATENT LITERATURE

Patent Literature 1: JP 2006-89552 A

SUMMARY OF INVENTION

TECHNICAL PROBLEM

The present invention aims to provide a rubber composition for a tire and a pneumatic tire formed from the rubber composition each of which is capable of solving the aforementioned problems and is excellent in grip performance on ice, abrasion resistance, and handling stability.

SOLUTION TO PROBLEM

The present invention relates to a rubber composition for a tire, comprising, per 100 parts by mass of a rubber component: 10 to 150 parts by mass of silica and 10 to 30 parts by mass of a diene rubber gel that contains a hydroxy group and has a glass transition temperature of -40°C to 0°C, the rubber component comprising, based on 100% by mass of the rubber component: (a) 30 to 90% by mass of butadiene rubber and (b) 10 to 60% by mass of a diene rubber that is other than the butadiene rubber (a) and has a glass transition temperature of -60°C or lower.

The diene rubber (b) is preferably at least one of natural rubber and isoprene rubber.

The butadiene rubber (a) is preferably a butadiene rubber synthesized in the presence of a rare-earth catalyst.

The rubber composition for a tire preferably comprises a processing aid.

The processing aid is preferably at least one selected from the group consisting of fatty acid metal salts, amide esters, and mixtures of any of fatty acid metal salts with any of amide esters or fatty acid amides.

In the rubber composition for a tire, preferably, an amount of (c) a styrene-butadiene rubber having a glass transition temperature of lower than -20°C is 40% by mass or less based on 100% by mass of the rubber component, and the diene rubber (b) is a diene rubber that is other than the rubbers (a) and (c) and has a glass transition temperature of -60°C or lower.

The diene rubber gel preferably has an average particle size of 10 to 100 nm.

The rubber composition for a tire is preferably for use as at least one of a rubber composition for a cap tread and a rubber composition for a base tread.

The present invention also relates to a pneumatic tire, formed from the above rubber composition. The pneumatic tire is preferably a winter tire or a studless winter tire.

ADVANTAGEOUS EFFECTS OF INVENTION

Since the present invention provides a rubber composition for a tire comprising specific amounts of silica and a diene rubber gel that contains a hydroxy group and has a glass transition temperature in a specific range, and also comprising a rubber component comprising specific amounts of (a) butadiene rubber and (b) a diene rubber that is other than the butadiene rubber (a) and has a glass transition temperature of -60°C or lower, a pneumatic tire can be provided which has excellent grip performance on ice, abrasion resistance, and handling stability.

BRIEF DESCRIPTION OF DRAWINGS

Fig. 1 is a schematic view showing an example of the diene rubber gel.
Fig. 2 is a schematic view showing the distributions of the silica and the diene rubber gel in the rubber composition.
Fig. 3 is a schematic view showing the distributions of the rubber component and the diene rubber gel in the rubber composition.
Fig. 4 shows exemplary tan $\delta$-temperature distribution curves.

DESCRIPTION OF EMBODIMENTS

The rubber composition for a tire of the present invention contains specific amounts of silica and a diene rubber gel that contains a hydroxy group and has a glass transition temperature in a specific range, and also contains a rubber component containing specific amounts of (a) butadiene rubber and (b) a diene rubber that is other than the butadiene rubber (a) and has a glass transition temperature of -60°C or lower.

Since the rubber composition contains a rubber component containing butadiene rubber (a) with a low glass transition temperature and the diene rubber (b), and also contains silica and the diene rubber gel with a glass transition temperature in a specific range, it is capable of improving grip performance on ice and abrasion resistance while maintaining favorable handling stability, and thereby providing a pneumatic tire excellent in grip performance on ice, abrasion resistance, and handling stability.

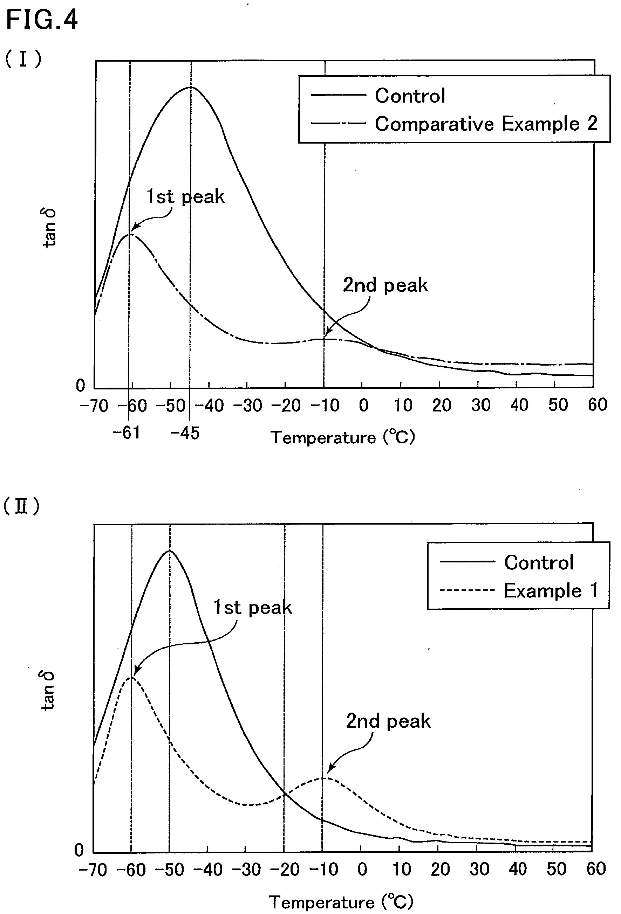

In a tan $\delta$-temperature distribution curve drawn by plotting loss tangent (tan $\delta$) values of the rubber composition for a tire (after vulcanization) of the present invention versus measurement temperature, two peaks: a tan $\delta$ peak (1st peak) assigned to the rubber component and a tan $\delta$ peak (2nd peak) assigned to the diene rubber gel are detected, and thus two peak tops are detected (see Fig. 4 (II)).

These peaks indicate that the rubber component and the diene rubber gel are immiscible with each other. The presence of the peak top of 2nd peak presumably indicates the capability of improving grip performance on ice and abrasion resistance while maintaining favorable handling stability. These detected two peak tops result from the fact that the rubber composition contains a rubber component containing butadiene rubber (a) with a low glass transition temperature and the diene rubber (b), and further contains silica and the diene rubber gel having a glass transition temperature in a specific range. The presence of the 2nd peak indicates the capability of increasing tan $\delta$ and improving grip performance (grip performance on ice, wet grip performance).

One of the reasons why the above combination leads to clear detection of two peak tops is presumably as follows.

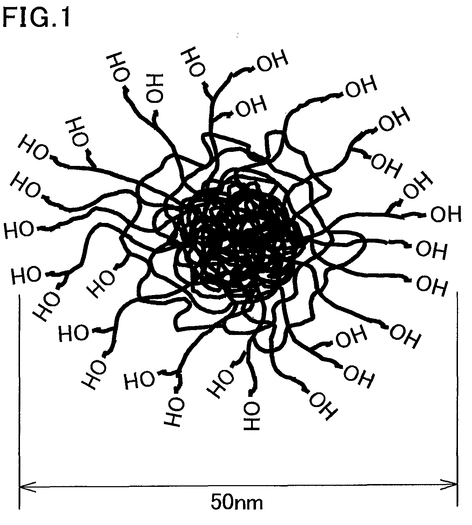

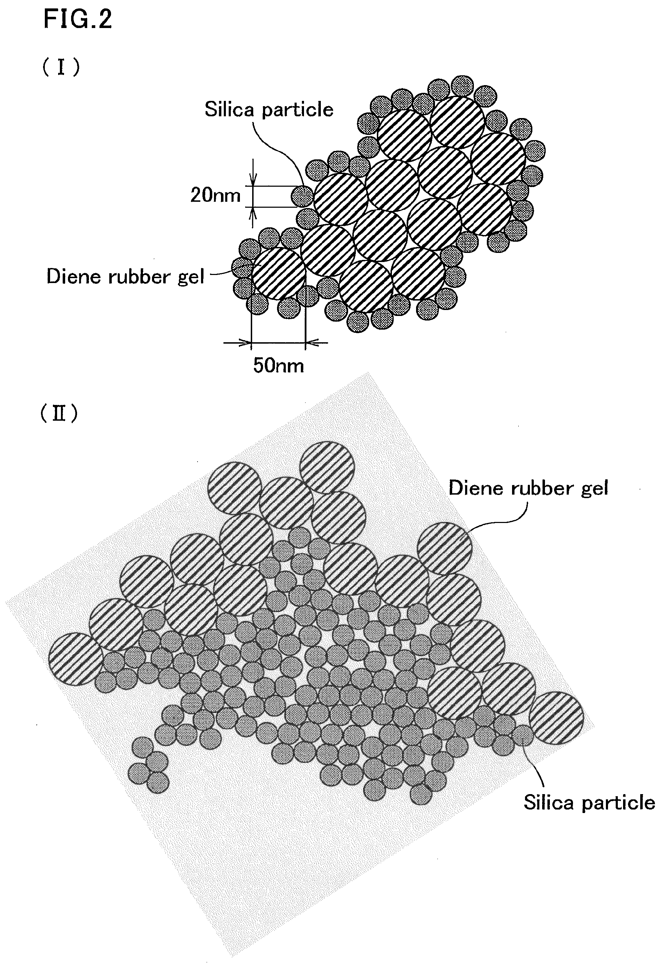

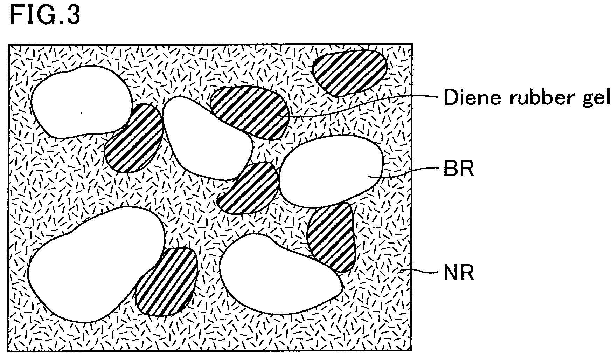

The diene rubber gel (an example of the diene rubber gel is schematically shown in Fig. 1) interacts with (physically binds to) a hydroxy group of silica via its own hydroxy group. However, the gel has strong self-aggregation properties, and thus is presumed to still form an aggregate after kneading the rubber composition. More specifically, the diene rubber gel presumably exists in the form where aggregates of the diene rubber gel are covered with silica particles as shown in Fig. 2(I) or in the form where aggregates of silica are covered with the diene rubber gel as shown in Fig. 2(II) in the kneaded rubber composition. Since the diene rubber gel has higher fluidity than silica, the (II) form can be expected to predominate. As mentioned, the diene rubber gel forms an aggregate in the kneaded rubber composition. Macroscopic observation of the rubber composition containing, for example, natural rubber (NR), butadiene rubber (BR), the diene rubber gel, and silica shows that islands of the diene rubber gel with a size which is equal to or not much smaller than that of islands of BR exist in a sea containing NR, as shown in Fig. 3. Thus, the diene rubber gel present in the rubber composition can be expected to be immiscible with the rubber component. This is presumably why two clear peak tops are detected in the tan $\delta$-temperature distribution curve.

On the other hand, when a diene rubber gel having a glass transition temperature beyond the specific range is used, the 1st peak and the 2nd peak overlap each other and the two peak tops are difficult to detect clearly. In this case, handling stability and grip performance on ice are deteriorated and the effect of improving abrasion resistance is small.

The present invention uses as the rubber component (a) butadiene rubber (BR) and (b) a diene rubber that is other than the butadiene rubber (a) and has a glass transition temperature of -60°C or lower.

The butadiene rubber (BR) (a) is not particularly limited. Examples thereof include those commonly used in the tire industry, such as high-cis BR (e.g. BR1220 (ZEON Corp.), BR150B (Ube Industries, Ltd.)); BR containing 1,2-syndiotactic polybutadiene crystals (SPB) (e.g. VCR412 and VCR617 (Ube Industries, Ltd.)); high-vinyl BR (e.g. Europrene BR HV80 (Polimeri Europa)); and BR (rare-earth BR) synthesized in the presence of a rare-earth catalyst. Tin-modified butadiene rubber (tin-modified BR), which is modified with a tin compound, may also be used. Preferred is rare-earth BR because it is highly effective to improve the grip performance on ice, abrasion resistance, and handling stability (especially, abrasion resistance).

Any known rare-earth catalyst may be used for synthesis of rare-earth BR. Examples thereof include catalysts containing lanthanide rare earth element compounds, organoaluminum compounds, aluminoxanes, or halogen-containing compounds, optionally with Lewis bases. Among these, Nd catalysts including neodymium (Nd)-containing compounds as the lanthanide rare earth element compounds are particularly preferred.

Examples of lanthanide rare earth element compounds include halides, carboxylates, alcoholates, thioalcoholates, and amides of rare-earth metals with atomic numbers of 57 to 71. In particular, Nd catalysts are preferred as mentioned above because they can provide high-cis and low-vinyl BRs.

Examples of organoaluminum compounds include those represented by $AlR^aR^bR^c$ wherein $R^a$, $R^b$, and $R^c$ are the same as or different from each other and each represent hydrogen or a C1-C8 hydrocarbon group. Examples of aluminoxanes include acyclic aluminoxanes and cyclic aluminoxanes. Examples of halogen-containing compounds include aluminum halides represented by $AlX_kR^d_{3-x}$ wherein X represents a halogen; $R^d$ represents a C1-C20 alkyl group, aryl group, or aralkyl group; and k is 1, 1.5, 2, or 3; strontium halides such as $Me_3SrCl$, $Me_2SrCl_2$, $MeSrHCl_2$, and $MeSrCl_3$; and metal halides such as silicon tetrachloride, tin tetrachloride, and titanium tetrachloride. Lewis bases may be used to convert lanthanide rare earth element compounds into complexes, and suitable examples thereof include acetylacetone, ketones, and alcohols.

In polymerization of butadiene, the rare-earth catalyst may be dissolved in an organic solvent (e.g. n-hexane, cyclohexane, n-heptane, toluene, xylene, benzene), or be carried on an appropriate carrier such as silica, magnesia, or magnesium chloride, before use. With respect to the polymerization conditions, the polymerization process may be either solution polymerization or bulk polymerization, the polymerization temperature is preferably -30°C to 150°C, and the polymerization pressure may be appropriately set depending on other conditions.

The rare-earth BR preferably has a Mooney viscosity $ML_{1+4}$ (at 100°C) of 35 or higher, more preferably 40 or higher. A Mooney viscosity of lower than 35 may cause the unvulcanized rubber composition to have a low viscosity, thereby failing to ensure a proper thickness after vulcanization. The Mooney viscosity is preferably 55 or lower, and more preferably 50 or lower. A Mooney viscosity exceeding 55 may cause the unvulcanized rubber composition to be so hard that the rubber composition can be difficult to extrude to provide smooth edges.

The Mooney viscosity can be measured in conformity with ISO289 or JIS K6300.

The rare-earth BR preferably has a ratio (Mw/Mn) of weight average molecular weight (Mw) to number average molecular weight (Mn) of 1.2 or higher, more preferably 1.5 or higher. An Mw/Mn ratio of lower than 1.2 tends to cause marked deterioration of processability. The Mw/Mn ratio is preferably 5 or lower, and more preferably 4 or lower. An Mw/Mn ratio exceeding 5 tends to lead to a reduction of the effect of improving abrasion resistance.

The Mw value of the rare-earth BR is preferably 300,000 or higher, and more preferably 500,000 or higher, whereas it is preferably 1,500,000 or lower, and more preferably 1,200,000 or lower. Also, the Mn value of the rare-earth BR is preferably 100,000 or higher, and more preferably 150,000 or higher, whereas it is preferably 1,000,000 or lower, and more preferably 800,000 or lower. Mw and Mn values below the respective lower limits each tend to lead to reduced abrasion resistance and poor fuel economy. These values exceeding the respective upper limits may each lead to poor processability.

The Mw and Mn values in the present invention are values measured with a gel permeation chromatograph (GPC) relative to polystyrene standards.

The rare-earth BR preferably has a cis content of 90% by mass or more, more preferably 93% by mass or more, and still more preferably 95% by mass or more. The BR with a cis content of less than 90% by mass may lead to reduced abrasion resistance.

The rare-earth BR preferably has a vinyl content of 1.8% by mass or less, more preferably 1.0% by mass or less, still more preferably 0.5% by mass or less, and particularly preferably 0.3% by mass or less. The BR with a vinyl content exceeding 1.8% by mass may lead to reduced abrasion resistance.

The vinyl content (1,2-butadiene unit content) and the cis content (cis-1,4-butadiene unit content) in the rare-earth BR in the present invention can be measured by infrared absorption spectrometry.

The amount of BR (a) based on 100% by mass of the rubber component is 30% by mass or more, preferably 40% by mass or more, and more preferably 50% by mass or more. The BR (a) in an amount of less than 30% by mass fails to give sufficient grip performance on ice, abrasion resistance, and handling stability. The amount of BR is 90% by mass or less, preferably 80% by mass or less, and more preferably 70% by mass or less. The BR (a) in an amount exceeding 90% by mass reduces the amount of the rubber (b) to be used together and thereby leads to reduced tensile strength at break, and also ends up reducing abrasion resistance.

In addition to BR (a), a diene rubber (b) that is other than the butadiene rubber (a) and has a glass transition temperature of -60°C or lower is also used in the rubber component.

The glass transition temperature (Tg) of the diene rubber (b) is -60°C or lower, preferably -65°C or lower, and more preferably -70°C or lower. The diene rubber with a Tg exceeding -60°C fails to give excellent grip performance on ice. In addition, the aforementioned two peak tops are then difficult to detect and therefore the grip performance on ice, abrasion resistance, and handling stability cannot be achieved in a balanced manner.

The Tg is preferably -110°C or higher. No diene rubbers for rubber compositions for tires have a Tg of lower than -110°C.

The glass transition temperature in the present invention is a value measured using a differential scanning calorimeter (Q200) (TA Instruments Japan Inc.) at a temperature increase rate of 10°C/min in conformity with JIS-K7121.

The diene rubber (b) is not particularly limited as long as it has a glass transition temperature in the above temperature range. Examples thereof include diene rubbers such as natural rubber (NR), isoprene rubber (IR), epoxidized natural rubber (ENR), acrylonitrile-butadiene rubber (NBR), chloroprene rubber (CR), butyl rubber (IIR), styrene-isoprene-butadiene copolymer rubber (SIBR), and ethylene-propylene-diene rubber (EPDM). The diene rubber (b) excludes the aforementioned BR (a) and an SBR (c) to be mentioned later. The diene rubber (b) is preferably NR or IR because they give excellent grip performance on ice, abrasion resistance, and handling stability.

The NR is not particularly limited, and examples thereof include those commonly used in the tire industry, such as SIR20, RSS#3, and TSR20. The IR is not particularly limited, and examples thereof include those commonly used in the tire industry, such as IR2200.

The amount of the diene rubber (b) (preferably at least one of NR and IR) based on 100% by mass of the rubber component is 10% by mass or more, preferably 20% by mass or more, and more preferably 30% by mass or more. The diene rubber (b) in an amount of less than 10% by mass fails to sufficiently achieve the effects of improving tensile strength at break and processability. The amount of the diene rubber is 60% by mass or less, preferably 50% by mass or less. The diene rubber (b) in an amount exceeding 60% by mass reduces the amount of the rubber (a) to be used together, thereby leading to insufficient grip performance on ice, abrasion resistance, and handling stability.

In cases where the diene rubber (b) includes multiple diene rubber species, the amount of the diene rubber (b) means the sum of the amounts of the multiple diene rubber species.

In the present invention, a styrene-butadiene rubber (SBR) (c) having a glass transition temperature of lower than -20°C may be used. The addition of the SBR (c) can improve wet grip performance and handling stability.

The glass transition temperature (Tg) of the SBR (c) is lower than -20°C, preferably -30°C or lower, and more preferably -40°C or lower. The SBR with a Tg of -20°C or higher may fail to sufficiently improve the grip performance on ice and abrasion resistance. The Tg is preferably -100°C or higher. The SBR with a Tg of lower than -100°C indicates a styrene content of about 0. This tends to result in insufficient improvement in wet grip performance.

The SBR (c) is not particularly limited as long as its glass transition temperature is in the aforementioned range. Examples thereof include emulsion-polymerized SBR (E-SBR), solution-polymerized SBR (S-SBR), and modified SBRs which have been modified with, for example, primary amino groups. Among these, preferred are modified SBRs because they are more effective to improve wet grip performance, fuel economy, and handling stability.

The modified SBR is preferably a copolymer of styrene and butadiene, containing an amino group or an alkoxysilyl group. The amino group or alkoxysilyl group may be bound to any of the polymerization initiation end, polymerization termination end, polymer backbone, and side chains. In order to suppress energy loss from the polymer ends to improve the hysteresis loss characteristics, the above group has preferably been introduced into the polymerization initiation end or polymerization termination end.

Among the modified SBRs, in particular those obtained by modifying solution-polymerized styrene-butadiene rubber (S-SBR) (modified S-SBR (modified SBR disclosed in JP 2010-111753 A)) can be suitably used.

In cases where the rubber composition for a tire of the present invention contains the SBR (c), the amount of the SBR (c) based on 100% by mass of the rubber component is preferably 40% by mass or less, and more preferably 30% by mass or less. The SBR (c) in an amount exceeding 40% by mass reduces the amounts of the rubbers (a) and (b) to be used together, likely leading to insufficient grip performance on ice and abrasion resistance. The amount of the SBR is preferably 5% by mass or more, and more preferably 10% by mass or more. The SBR (c) in an amount of less than 5% by mass may fail to give sufficient handling stability.

In the present invention, silica is used. This improves grip performance on ice, wet grip performance, and fuel economy. The silica is not particularly limited, and examples thereof include dry silica (silicic anhydride) and wet silica (hydrous silica). Preferred is wet silica because it has more silanol groups. These types of silica may be used alone, or two or more of these may be used in combination.

The silica preferably has a nitrogen adsorption specific surface area ($N_2SA$) of 50 $m^2$/g or greater, more preferably 100 $m^2$/g or greater, and still more preferably 150 $m^2$/g or greater. The silica with an $N_2SA$ of smaller than 50 $m^2$/g tends to lead to reduced tensile strength at break and reduced abrasion resistance. The $N_2SA$ of silica is preferably 300 $m^2$/g or smaller, more preferably 250 $m^2$/g or smaller, and still more preferably 200 $m^2$/g or smaller. The silica with an $N_2SA$ exceeding 300 $m^2$/g tends to have poor dispersibility, increase the heat build-up of tires, and reduce elongation at break. Such silica also tends to lead to poor abrasion resistance.

The nitrogen adsorption specific surface area of silica is a value measured by the BET method in conformity with ASTM D3037-81.

The amount of silica per 100 parts by mass of the rubber component is 10 parts by mass or more, preferably 30 parts by mass or more, more preferably 50 parts by mass or more, and still more preferably 60 parts by mass or more. The silica in an amount of less than 10 parts by mass tends to fail to give the effects of silica sufficiently. The silica in an amount exceeding 50 parts by mass gives better abrasion resistance. The amount of silica is 150 parts by mass or less, preferably 120 parts by mass or less. The silica in an amount exceeding 150 parts by mass tends to have poor dispersibility in the rubber composition and thereby lead to reduction in the properties such as abrasion resistance, handling stability, and strength.

In the present invention, a diene rubber gel is used. This improves grip performance on ice, wet grip performance, and abrasion resistance (especially, grip performance on ice and abrasion resistance) while maintaining favorable handling stability. The diene rubber gel is a filler having intermediate characteristics between filler and rubber components. This means that the diene rubber gel itself also has a property of absorbing elongation when a tensile stress is applied to the rubber composition (in other words, the diene rubber gel has elasticity). This is probably why the diene rubber gel is very effective to improve the above properties.

The diene rubber gel can be prepared by cross-linking a diene rubber dispersion. Examples of the diene rubber dispersion include rubber latex prepared by emulsion polymerization, and diene rubber dispersions obtained by emulsifying solution-polymerized diene rubbers in water. Examples of the cross-linker include organic peroxides, organic azo compounds, and sulfur cross-linkers. Cross-linking of a diene rubber may also be performed by copolymerizing the diene rubber with a polyfunctional compound having a cross-linking effect during emulsion polymerization of the diene rubber. Specific examples of cross-linking methods include those disclosed in JP 3739198 B, JP 3299343 B, JP 2004-504465 T, and JP 2004-506058 T.

The diene rubber gel in the present invention contains a hydroxy group (OH group).

A diene rubber gel, which is formed from a diene rubber, has a C=C double bond on the surface of each gel particle. Thus, an OH group can be incorporated into the particle surface by modifying the diene rubber with a compound that contains a hydroxy group and is reactive with a C=C double bond.

Examples of such a compound (modifier) include hydroxyalkyl (meth)acrylates such as hydroxybutyl acrylate or methacrylate, hydroxyethyl acrylate or methacrylate, and hydroxypropyl acrylate or methacrylate, as disclosed in JP 2004-506058 T.

The diene rubber component forming the diene rubber gel may be any of the aforementioned diene rubbers. These diene rubbers may be used alone, or two or more of these may be used in combination. The diene rubber gel is preferably formed mainly from BR and/or SBR because then the effects of the present invention can be suitably achieved. The diene rubber gel is more preferably formed mainly from SBR because then the Tg of the composition can be easily adjusted.

The diene rubber gel has a glass transition temperature $Tg_1$ of -40°C or higher, preferably -35°C or higher, and more preferably -30°C or higher. If $Tg_1$ is lower than -40°C, the two peak tops are difficult to detect clearly in the tan $\delta$-temperature distribution curve, and thus the handling stability and grip performance on ice are deteriorated and the effect of improving abrasion resistance is also small.

The glass transition temperature is 0°C or lower, preferably -10°C or lower, and more preferably -15°C or lower. The diene rubber gel with a Tg exceeding 0°C is likely to be unevenly cross-linked and fails to sufficiently improve grip performance (grip performance on ice, wet grip performance) and abrasion resistance.

The diene rubber gel preferably has an average particle size of 10 nm or greater, more preferably 20 nm or greater, and still more preferably 30 nm or greater. The diene rubber gel with an average particle size of smaller than 10 nm may agglomerate.

The average particle size is preferably 100 nm or smaller, more preferably 90 nm or smaller, and still more preferably 80 nm or smaller. The diene rubber gel with an average particle size exceeding 100 nm may cause deterioration of abrasion resistance.

The average particle size of the diene rubber gel is measured using an electron microscope.

The diene rubber gel preferably has a hydroxyl value (mgKOH/g-gel) of 60 or lower, more preferably 50 or lower, and still more preferably 40 or lower. The diene rubber gel with a hydroxyl value exceeding 60 may form large particles leading to reduced strength and abrasion resistance.

The hydroxyl value is preferably 10 or higher, more preferably 20 or higher, and still more preferably 30 or higher. The diene rubber gel with a hydroxyl value of lower than 10 may result in a smaller interaction between silica and the polymer and therefore reduction in strength and abrasion resistance.

The hydroxyl value of the diene rubber gel represents the amount of potassium hydroxide in milligrams required for neutralizing acetic acid bonded to the hydroxy group of the diene rubber gel when 1 g of the diene rubber gel is acetylated. This value is measured by potentiometric titration (JIS K0070:1992).

The tan δ-temperature distribution curve is likely to show two clearly separated peaks when the glass transition temperature $Tg_1$ of the diene rubber gel and the glass transition temperature $Tg_2$ of a main polymer, which is a polymer species whose amount is the largest in the rubber component, satisfy the following relation:

$$Tg_1 - Tg_2 \geq 30.$$

The $Tg_1 - Tg_2$ value is 30 or higher, preferably 32 or higher, and more preferably 34 or higher. In the case of the rubber component containing two or more BR species, the respective BR species are considered as different polymer species and the polymer species whose amount is the largest in the rubber component is defined as the main polymer.

The amount of the diene rubber gel per 100 parts by mass of the rubber component is 10 parts by mass or more, preferably 15 parts by mass or more. The diene rubber gel in an amount of less than 10 parts by mass fails to give sufficient grip performance on ice and abrasion resistance. The amount of the diene rubber gel is 30 parts by mass or less, preferably 25 parts by mass or less. The diene rubber gel in an amount exceeding 30 parts by mass deteriorates handling stability.

The rubber composition of the present invention preferably contains a silane coupling agent in addition to silica and the diene rubber gel. The addition of a silane coupling agent enables coupling between the diene rubber gel and silica, between the diene rubber gel and the rubber component, and between silica and the rubber component via the silane coupling agent. Further, the silane coupling agent, combined with the interaction between the hydroxy group of the diene rubber gel and the silanol group on the surface of silica, can highly improve grip performance on ice, abrasion resistance, and handling stability (especially, grip performance on ice and abrasion resistance).

The silane coupling agent may be any silane coupling agent conventionally used in combination with silica in the rubber industry. Examples of the silane coupling agent include sulfide, mercapto, vinyl, amino, glycidoxy, nitro, and chloro silane coupling agents. Among these, preferred are sulfide silane coupling agents. These silane coupling agents may be used alone, or two or more of these may be used in combination.

The sulfide silane coupling agent is preferably bis(3-triethoxysilylpropyl)tetrasulfide, bis(2-triethoxysilylethyl)tetrasulfide, bis(3-triethoxysilylpropyl)disulfide, or bis(2-triethoxysilylethyl)disulfide, and more preferably bis(3-triethoxysilylpropyl)disulfide, because they can improve the grip performance on ice, abrasion resistance, and handling stability in a balanced manner.

The amount of the silane coupling agent per 100 parts by mass in total of the diene rubber gel and silica is preferably 1 part by mass or more, and more preferably 5 parts by mass or more. The silane coupling agent in an amount of less than 1 part by mass may fail to give sufficient grip performance on ice, abrasion resistance, and handling stability. The amount of the silane coupling agent is preferably 15 parts by mass or less, and more preferably 10 parts by mass or less. The silane coupling agent in an amount exceeding 15 parts by mass may reduce tensile strength at break and abrasion resistance.

The rubber composition of the present invention preferably contains a processing aid. This improves the dispersibility of filler (especially, silica) and the diene rubber gel and thus improves grip performance on ice, abrasion resistance, and handling stability.

Examples of the processing aid include fatty acid metal salts, fatty acid amides, amide esters, surfactants for silica, fatty acid esters, mixtures of fatty acid metal salts with amide esters, and mixtures of fatty acid metal salts with fatty acid amides. These may be used alone, or two or more of these may be used in combination. In particular, the processing aid is preferably at least one selected from the group consisting of fatty acid metal salts, amide esters, and mixtures of any of fatty acid metal salts with any of amide esters or fatty acid amides.

The fatty acid of the fatty acid metal salt is not particularly limited. Examples thereof include saturated or unsaturated fatty acids (preferably C6-C28 (more preferably C10-C25, and still more preferably C14-C20) saturated or unsaturated fatty acids), such as lauric acid, myristic acid, palmitic acid, stearic acid, oleic acid, linoleic acid, linolenic acid, arachidic acid, behenic acid, and nervonic acid. These may be used alone, or two or more of these may be used in admixture. Saturated fatty acids are preferred, and C14-C20 saturated fatty acids are more preferred.

Examples of the metal of the fatty acid metal salt include alkali metals (e.g. potassium and sodium), alkaline earth metals (e.g. magnesium, calcium, and barium), zinc, nickel, and molybdenum. Among these, zinc and calcium are preferred, and zinc is more preferred.

Examples of amide esters include fatty acid amide esters containing the aforementioned saturated or unsaturated fatty acids.

The fatty acid amide may be either a saturated fatty acid amide or an unsaturated fatty acid amide. Examples of saturated fatty acid amides include N-(1-oxooctadecyl)sarcosine, stearamide, and behenamide. Examples of unsaturated fatty acid amides include oleamide and erucamide.

Specific examples of mixtures of fatty acid metal salts with amide esters include Aflux16 (Rhein Chemie) which is a mixture of a fatty acid calcium salt and an amide ester.

Specific examples of mixtures of fatty acid metal salts with fatty acid amides include WB16 (STRUKTOL) which is a mixture of a fatty acid calcium salt and a fatty acid amide.

The amount of the processing aid is preferably 0.5 parts by mass or more, and more preferably 2 parts by mass or more, per 100 parts by mass of the rubber component. The processing aid in an amount of less than 0.5 parts by mass tends to fail to give the effects of the processing aid sufficiently. The amount of the processing aid is preferably 10 parts by mass or less, and more preferably 6 parts by mass or less, per 100 parts by mass of the rubber component. The processing aid in an amount exceeding 10 parts by mass may deteriorate fuel economy.

The rubber composition of the present invention may contain carbon black. The addition of carbon black increases reinforcement and improves abrasion resistance and handling stability. Examples of the carbon black to be used include, but are not limited to, GPF, FEF, HAF, ISAF, and SAF.

In the case of using carbon black, the carbon black preferably has a nitrogen adsorption specific surface area ($N_2SA$) of 50 $m^2$/g or greater, more preferably 80 $m^2$/g or greater. The carbon black with an $N_2SA$ of smaller than 50 $m^2$/g may lead to reduced tensile strength at break, reduced abrasion resistance, and reduced handling stability. The $N_2SA$ of carbon black is preferably 150 $m^2$/g or smaller, and more preferably 130 $m^2$/g or smaller. The carbon black with an $N_2SA$ exceeding 150 $m^2$/g may have poor dispersibility and fail to give sufficient rubber strength and abrasion resistance.

The nitrogen adsorption specific surface area of carbon black can be determined in conformity with JIS K6217-2:2001.

The amount of carbon black is preferably 3 parts by mass or more per 100 parts by mass of the rubber component. The carbon black in an amount of less than 3 parts by mass tends to fail to give sufficient UV degradation resistance and reinforcement. The amount of carbon black is preferably 40 parts by mass or less, more preferably 20 parts by mass or less, and still more preferably 10 parts by mass or less, per 100 parts by mass of the rubber component. The carbon black in an amount exceeding 40 parts by mass may deteriorate fuel economy and grip performance on ice. In addition, such an amount may inhibit dispersion of the diene rubber gel, causing the diene rubber gel to fail to give its effects sufficiently.

The silica content based on 100% by mass in total of silica and carbon black is preferably 60% by mass or more, and more preferably 80% by mass or more, whereas it is preferably 98% by mass or less, and more preferably 95% by mass or less. The silica content in such a range allows the grip performance on ice, abrasion resistance, and handling stability to be improved at high levels in a balanced manner.

In addition to the aforementioned components, the rubber composition may contain any of compounding agents conventionally used in the rubber industry, including fillers such as clay, talc, bituminous coal powder, microfibrils derived from natural pulp, aluminum hydroxide, and alumina, softening agents (e.g. oils such as paraffinic, aromatic, and naphthenic process oils, plasticizers), low molecular weight liquid polymers (liquid BR, liquid SBR), tackifiers (e.g. coumarone-indene resin, rosin resin, cyclopentadiene resin), waxes, antioxidants, age resistors, vulcanization accelerating aids (e.g. stearic acid, zinc oxide), vulcanizing agents such as sulfur and sulfur-containing compounds, and vulcanization accelerators. The "liquid polymer" herein means a polymer which is in the form of liquid at room temperature. Specific examples thereof include Ricon 130 (liquid BR) produced by Sartomer Company Inc.

The combined amount of oil and the liquid polymer is preferably 10 parts by mass or more, and more preferably 25 parts by mass or more, per 100 parts by mass of the rubber component. The oil and the liquid polymer in a combined amount of less than 10 parts by mass tend to fail to give sufficient grip performance on ice and processability. The combined amount is also preferably 60 parts by mass or less, and more preferably 45 parts by mass or less, per 100 parts by mass of the rubber component. The oil and the liquid polymer in a combined amount exceeding 60 parts by mass may reduce abrasion resistance.

In the case of using sulfur as a vulcanizing agent, the amount of sulfur per 100 parts by mass of the rubber component is preferably 0.3 parts by mass or more, and more preferably 0.5 parts by mass or more. The amount is also preferably 3.0 parts by mass or less, more preferably 2.0 parts by mass or less, and still more preferably 1.5 parts by mass or less. The sulfur in an amount of less than 0.3 parts by mass tends to give a low curing rate, cause undercure and thereby fail to give sufficient abrasion resistance and handling stability. The sulfur in an amount exceeding 3.0 parts by mass tends to give a high curing rate, cause scorching and thereby reduce abrasion resistance and thermal aging resistance.

Examples of vulcanization accelerators include guanidine, aldehyde-amine, aldehyde-ammonia, thiazole, sulfenamide, thiourea, thiuram, dithiocarbamate, and xanthate compounds. These vulcanization accelerators may be used alone, or two or more of these may be used in combination. Among these, preferred are sulfenamide vulcanization accelerators (e.g. N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and N,N-diisopropyl-2-benzothiazole sulfenamide), guanidine vulcanization accelerators (e.g. N,N'-diphenylguanidine (DPG), diorthotriguanidine, triphenylguanidine, ortho-tolyl biguanide, and diphenylguanidine phthalate), from the viewpoints of dispersibility into rubber and stability of vulcanizate properties. Particularly preferred is combination use of CBS and DPG.

The amount of the vulcanization accelerator per 100 parts by mass of the rubber component is preferably 1.0 part by mass or more, more preferably 1.5 parts by mass or more, and still more preferably 2.0 parts by mass or more. The amount is also preferably 10.0 parts by mass or less, and more preferably 8.0 parts by mass or less. The vulcanization accelerator in an amount of less than 1.0 part by mass tends to give a low curing rate, cause undercure and thereby fail to give sufficient abrasion resistance and handling stability. The vulcanization accelerator in an amount exceeding 10.0 parts by mass tends to give a high curing rate, cause scorching and thereby reduce abrasion resistance.

The amount of DPG per 100 parts by mass of the rubber component is preferably 1.0 part by mass or more, more preferably 1.5 parts by mass or more, and still more preferably 2.0 parts by mass or more. The amount is also preferably 6.0 parts by mass or less, and more preferably 5.5 parts by mass or less. The DPG in an amount of less than 1.0 part by mass tends to give a low curing rate, cause undercure and thereby fail to give sufficient abrasion resistance and handling stability. The DPG in an amount exceeding 6.0 parts by mass tends to give a high curing rate, cause scorching and thereby reduce abrasion resistance.

The rubber composition of the present invention may be prepared by any known method. Examples of the method include a method in which the components are kneaded using a rubber kneading machine such as an open roll mill or a Banbury mixer, and then the kneaded mixture is vulcanized.

In particular, the kneading step with a rubber kneading machine is preferably performed as follows. If one cycle of kneading is defined as introducing materials into the rubber kneading machine, kneading the materials, and discharging the rubber mixture from the rubber kneading machine, the kneading step preferably includes two cycles of kneading when the total amount of filler is less than 70 parts by mass per 100 parts by mass of the rubber component. On the other hand, when the total amount of filler is 70 parts by mass or more per 100 parts by mass of the rubber component, the kneading step preferably includes three or more cycles of kneading. The diene rubber gel may, for example, be introduced and kneaded together with filler and other chemicals after the rubber component is introduced into the rubber kneading machine, during a cycle before the last cycle. Although the diene rubber gel has a small particle size, it forms an aggregate with a size similar to that of styrene-butadiene rubber or butadiene rubber through self-aggregation or re-aggregation. In a specific example of the kneading step including two cycles of kneading, for example, the kneading step may include a base kneading step of kneading the rubber component, silica, the diene rubber gel, and other components, and a final kneading step of kneading a kneaded mixture obtained in the base kneading step with a vulcanizing agent and a vulcanization accelerator.

In a tan δ-temperature distribution curve drawn by plotting loss tangent (tan δ) values of the rubber composition (after vulcanization) of the present invention versus measurement temperature, two peaks, that is, a tan δ peak (1st peak) assigned to the rubber component and a tan δ peak (2nd peak) assigned to the diene rubber gel are detected (see Fig. 4(II)).

In order to favorably achieve the effects of the present invention, the peak top of the 2nd peak preferably exists at -20°C to 0°C, more preferably -15°C to -5°C.

The tan δ-temperature distribution curve herein can be obtained by the method mentioned in the section "EXAMPLES".

The peak top of the 2nd peak of the rubber composition (after vulcanization) of the present invention may be adjusted within the above temperature range by blending butadiene rubber (a) with a low glass transition temperature and the diene rubber (b) as the rubber component and further adding the diene rubber gel having a glass transition temperature in a specific range and silica.

The rubber composition of the present invention can be suitably used for various tire components (especially, treads (cap tread, base tread)).

The cap tread is an outer layer part of a multilayer tread. For example, the cap tread corresponds to the outer surface layer of a tread having a two-layer structure [outer surface layer (cap tread) and inner surface layer (base tread)]. The base tread is an inner layer part of a multilayer tread. The base tread corresponds to the inner surface layer of the above two-layer tread.

The pneumatic tire of the present invention may be produced by any ordinary method using the above rubber composition. Specifically, the tire may be produced as follows: the unvulcanized rubber composition containing various additives as appropriate is extruded into the shape of a tire component (especially, treads (cap tread and/or base tread)); the extrudate is arranged and assembled with other tire components by a usual method in a tire building machine to form an unvulcanized tire; and then the unvulcanized tire is heated and pressurized in a vulcanizer to form a tire. The pneumatic tire of the present invention is excellent in grip performance on ice, abrasion resistance, and handling stability, and thus it can be suitably used as a winter tire or a studless winter tire.

EXAMPLES

The present invention will be described in greater detail referring to, but not limited to, examples.

The following will collectively describe the chemicals used in the examples and comparative examples.

SBR 1: HPR340 (JSR Corp., modified S-SBR, Tg: -64°C, coupled and modified with alkoxysilane at its end)
SBR 2: HPR355 (JSR Corp., modified S-SBR, Tg: -27°C, coupled and modified with alkoxysilane at its end)
BR 1: BR150B (Ube Industries, Ltd., Tg: -114°C, cis content: 97% by mass)
BR 2: BR1250H (ZEON Corp., tin-modified BR, Tg: -90°C)
BR 3: CB24 (LANXESS, BR synthesized in the presence of Nd catalyst, Tg: -116°C, cis content: 96% by mass, vinyl content: 0.7% by mass, $ML_{1+4}$ (at 100°C): 45, Mw/Mn: 2.69, Mw: 500,000, Mn: 186,000)
NR: TSR20 (Tg: -73°C)
Diene rubber gel 1: Nanoprene B M75OH (LANXESS, diene rubber component: BR, Tg: -75°C, hydroxyl value: 35 mgKOH/g-gel, average particle size: 50 nm)
Diene rubber gel 2: Nanoprene B M25OH (LANXESS, diene rubber component: SBR and BR, Tg: -25°C, hydroxyl value: 35 mgKOH/g-gel, average particle size: 50 nm)
Diene rubber gel 3: Nanoprene B M15OH (LANXESS, diene rubber component: SBR, Tg: -15°C, hydroxyl value: 35 mgKOH/g-gel, average particle size: 50 nm)
Silica 1: ULTRASIL VN3 (EVONIK DEGUSSA, $N_2SA$: 175 m$^2$/g)
Silica 2: Z1085Gr (Rhodia, $N_2SA$: 80 m$^2$/g)
Carbon black: DIABLACK I (Mitsubishi Chemical Corp., N220, $N_2SA$: 114 m$^2$/g)
Mineral oil: Process oil P-200 (JX Nippon Oil & Energy Corp.)
Silane coupling agent: Si266 (EVONIK DEGUSSA, bis(3-triethoxysilylpropyl)disulfide)
Wax: Ozoace 0355 (NIPPON SEIRO CO., LTD.) Antioxidant: Antigene 6C (Sumitomo Chemical Co., Ltd., N-(1,3-dimethylbutyl)-N'-phenyl-p-phenylenediamine)
Stearic acid: stearic acid "TSUBAKI" (NOF Corp.)
Zinc oxide: zinc oxide #1 (Mitsui Mining & Smelting Co., Ltd.)
Aktiplast pp: Aktiplast pp (Rhein Chemie, saturated fatty acid zinc salt (carbon number of saturated fatty acid: 15 to 20))
Aflux37: Aflux37 (Rhein Chemie, amide ester)
EF44: EF44 (STRUKTOL, saturated fatty acid zinc salt)
Aflux16: Aflux16 (Rhein Chemie, mixture of fatty acid calcium salt and amide ester)
Sulfur: 5% oil-treated sulfur (Sanshin Chemical Industry Co., Ltd.)
Vulcanization accelerator 1: NOCCELER D (Ouchi Shinko Chemical Industrial Co., Ltd., N,N'-diphenylguanidine)
Vulcanization accelerator 2: NOCCELER CZ (Ouchi Shinko Chemical Industrial Co., Ltd., N-cyclohexyl-2-benzothiazolyl sulfenamide)

(Examples 1 to 15 and Comparative Examples 1 to 9)

According to each of the compositions shown in Tables 1 and 2, the materials except the diene rubber gel, sulfur, and vulcanization accelerators were kneaded at 150°C for five minutes using a Banbury mixer to provide a kneaded mixture (base kneading step). Next, to the kneaded mixture were added the diene rubber gel, sulfur, and vulcanization accelerators, and the mixture was kneaded at 80°C for six minutes using an open roll mill to provide an unvulcanized rubber composition (final kneading step). The obtained unvulcanized rubber composition was press-vulcanized at 170°C for 12 minutes to provide a vulcanized rubber composition.

Part of the obtained unvulcanized rubber composition was formed into tread (cap tread and base tread) shapes, assembled with other tire components, and then vulcanized at 170°C for 12 minutes in a patterned mold to provide a test studless winter tire (195/65R15).

(Example 16)

A vulcanized rubber composition and a test studless winter tire were prepared in the same manner as in Examples 1 to 15 and Comparative Examples 1 to 9, except that the diene rubber gel was introduced into the Banbury mixer together with the rubber component at the beginning of the base kneading step.

(Example 17)

A vulcanized rubber composition and a test studless winter tire were prepared in the same manner as in Examples 1 to 15 and Comparative Examples 1 to 9, except that the diene rubber gel was introduced into the open roll mill in the latter half of the final kneading step.

The obtained vulcanized rubber compositions and test studless winter tires were evaluated as follows. Tables 1 and 2 show the test results.

(tan $\delta$-Temperature distribution curve)

For each of the obtained vulcanized rubber compositions, a tan $\delta$-temperature distribution curve within a temperature range from -120°C to 70°C was determined at a frequency of 10 Hz, an initial strain of 10%, an amplitude of $\pm 0.25\%$, and a temperature increase rate of 2°C/min using a viscoelastic spectrometer (Iwamoto Seisakusho). Based on the determined temperature distribution curve, the temperature corresponding to the peak top of the tan $\delta$ peak (1st peak) assigned to the rubber component and the temperature corresponding to the peak top of the tan $\delta$ peak (2nd peak) assigned to the diene rubber gel were determined. The "None" in the tables means that no clear peak top was observed.

(Grip performance on ice)

The test studless winter tires were mounted on a front-wheel drive car with a displacement of 2000 cc made in Japan, and the car was driven on an ice layer (flat frozen road (at -10°C to -15°C)) in a test course in Nayoro, Hokkaido. During the driving, a test driver comprehensively evaluated the steering response, the speed at which the car skidded or the driver completely lost the vehicle control when the driver changed lanes or drove round the circuit while gradually accelerating the car, and the like. In the evaluation, the results in Comparative Example 1 are defined as 100. A greater value indicates better grip performance on ice. In order to break in the surfaces of the test tires, each set of tires were broken-in 100 km before the test.

(Handling stability)

The test studless winter tires were mounted on a front-wheel drive car with a displacement of 2000 cc made in Japan, and the car was driven on the dry asphalt road at a road surface temperature of 25°C in a test course. During the driving, a test driver comprehensively evaluated the steering response to slight steering angle changes and the response to sudden lane change. In the evaluation, the results in Comparative Example 1 are defined as 100. A greater value indicates better handling stability. Those with an index of 95 or greater are assessed as good.

(Abrasion resistance)

The test studless winter tires were mounted on a front-wheel drive car with a displacement of 2000 cc made in Japan, and the car was driven 20 laps on the asphalt road in a test course. The depth of the grooves of the tire was measured after the driving, and the results were expressed as an index relative to that of Comparative Example 1 (= 100). A greater value indicates better abrasion resistance.

[Table 1]

| | | Comparative Examples | | | | | | | | |
|---|---|---|---|---|---|---|---|---|---|---|
| | | 1 | 2 | 3 | 4 | 5 | 6 | 7 | 8 | 9 |
| | $Tg_1 - Tg_2$ | — | 39 | 89 | 89 | 89 | 89 | 39 | 48 | 39 |
| Composition (parts by mass) | SBR 1 ($Tg_2$: -64) | — | — | — | — | — | — | 45 | — | — |
| | SBR 2 ($Tg_2$: -27) | — | — | — | — | — | — | — | — | — |
| | BR 1 ($Tg_2$: -114) | 60 | 60 | 60 | 60 | 60 | 60 | 35 | 20 | 60 |
| | BR 2 ($Tg_2$: -90) | — | — | — | — | — | — | — | — | — |
| | BR 3 ($Tg_2$: -116) | — | — | — | — | — | — | — | — | — |
| | NR ($Tg_2$: -73) | 40 | 40 | 40 | 40 | 40 | 40 | 20 | 80 | 40 |
| | Diene rubber gel 1 ($Tg_1$: -75) | — | 20 | — | — | — | — | — | — | 20 |
| | Diene rubber gel 2 ($Tg_1$: -25) | — | — | 5 | 40 | 20 | 20 | 20 | 20 | — |
| | Diene rubber gel 3 ($Tg_1$: -15) | — | — | — | — | — | — | — | — | — |
| | Silica 1 | 45 | 45 | 45 | 45 | 9 | — | 45 | 45 | — |
| | Silica 2 | — | — | — | — | — | 155 | — | — | 100 |
| | Carbon black | 5 | 5 | 5 | 5 | 41 | 5 | 5 | 5 | 5 |
| | Mineral oil | 20 | 20 | 20 | 20 | 20 | 50 | 20 | 20 | 35 |
| | Silane coupling agent | 2.7 | 2.7 | 2.7 | 2.7 | 0.6 | 9.3 | 2.7 | 2.7 | 6.0 |
| | Wax | 2 | 2 | 2 | 2 | 2 | 2 | 2 | 2 | 2 |
| | Antioxidant | 2 | 2 | 2 | 2 | 2 | 2 | 2 | 2 | 2 |
| | Stearic acid | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 |
| | Aktiplast pp | — | — | — | — | — | — | — | — | — |
| | Sulfur | 0.8 | 0.8 | 0.8 | 0.8 | 0.8 | Not base-keadable | 0.8 | 0.8 | 0.8 |
| | Vulcanization accelerator 1 (DPG) | 1.5 | 2.5 | 1.75 | 3.5 | 1.5 | | 2.5 | 2.5 | 4.5 |
| | Vulcanization accelerator 2 (CBS) | 1.5 | 1.5 | 1.5 | 1.5 | 1.5 | | 1.5 | 1.5 | 1.5 |
| Evaluation results | 1st peak top temperature (°C) | -59 | -61 | -59 | -60 | -60 | Not evaluable | -55 | -52 | -61 |
| | 2nd peak top temperature (°C) | None | None | None | -11 | -11 | | -10 | -10 | None |
| | Grip performance on ice | 100 | 97 | 103 | 106 | 92 | | 91 | 75 | 97 |
| | Handling stability | 100 | 98 | 101 | 90 | 110 | | 105 | 90 | 102 |
| | Abrasion resistance | 100 | 112 | 103 | 106 | 106 | | 91 | 85 | 114 |
| | Average value of three properties | 100.0 | 102.3 | 102.3 | 100.7 | 102.7 | | 95.7 | 83.3 | 104.3 |

[Table 2]

Examples

| Composition (parts by mass) | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| $Tg_1-Tg_2$ | 89 | 99 | 89 | 89 | 89 | 89 | 89 | 91 | 91 | 91 | 89 | 91 | 91 | 91 | 91 | 89 | 89 |
| SBR 1 ($Tg_2$: -64) | — | — | — | — | — | — | — | — | — | — | — | — | — | — | — | — | — |
| SBR 2 ($Tg_2$: -27) | — | — | — | — | — | — | 20 | — | 20 | — | — | — | — | — | — | — | — |
| BR 1 ($Tg_2$: -114) | 60 | 60 | 60 | 60 | 60 | 60 | 41 | — | — | 20 | 60 | — | — | — | — | 60 | 60 |
| BR 2 ($Tg_2$: -90) | — | — | — | — | — | — | — | — | — | — | — | — | — | — | — | — | — |
| BR 3 ($Tg_2$: -116) | — | — | — | — | — | — | — | 60 | 60 | 60 | — | 60 | 60 | 60 | 60 | — | — |
| NR ($Tg_2$: -73) | 40 | 40 | 40 | 40 | 40 | 40 | 39 | 40 | 20 | 20 | 40 | 40 | 40 | 40 | 40 | 40 | 40 |
| Diene rubber gel 1 ($Tg_1$: -75) | — | — | — | — | — | — | — | — | — | — | — | — | — | — | — | — | — |
| Diene rubber gel 2 ($Tg_1$: -25) | 20 | — | 20 | 20 | 20 | 20 | 20 | 45 | 45 | 45 | 20 | 20 | 20 | 20 | 20 | 45 | 45 |
| Diene rubber gel 3 ($Tg_1$: -15) | — | 20 | — | — | — | — | — | — | — | — | — | — | — | — | — | — | — |
| Silica 1 | 45 | 45 | 20 | 20 | 20 | 100 | 45 | 45 | 45 | 45 | 100 | 100 | 100 | 100 | 100 | 45 | 45 |
| Silica 2 | — | — | — | — | — | — | — | — | — | — | — | — | — | — | — | — | — |
| Carbon black | 5 | 5 | 30 | 30 | 30 | 5 | 5 | 5 | 5 | 5 | 5 | 5 | 5 | 5 | 5 | 5 | 5 |
| Mineral oil | 20 | 20 | 20 | 20 | 20 | 35 | 20 | 20 | 20 | 20 | 35 | 35 | 35 | 35 | 35 | 20 | 20 |
| Silane coupling agent | 2.7 | 2.7 | 1.2 | 1.2 | 1.2 | 6 | 2.7 | 2.7 | 2.7 | 2.7 | 6 | 6 | 6 | 6 | 6 | 2.7 | 2.7 |
| Wax | 2 | 2 | 2 | 2 | 2 | 2 | 2 | 2 | 2 | 2 | 2 | 2 | 2 | 2 | 2 | 2 | 2 |
| Antioxidant | 2 | 2 | 2 | 2 | 2 | 2 | 2 | 2 | 2 | 2 | 2 | 2 | 2 | 2 | 2 | 2 | 2 |
| Stearic acid | 2 | 2 | 2 | 2 | 2 | 2 | 2 | 2 | 2 | 2 | 2 | 2 | 2 | 2 | 2 | 2 | 2 |
| Zinc oxide | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| Aflux37 | — | — | — | — | — | — | — | — | — | — | — | — | — | — | — | — | — |
| Aflux16 | — | — | — | — | — | — | — | — | — | — | — | — | — | — | — | — | — |
| EF44 | — | — | — | — | — | — | — | — | — | — | — | — | — | — | — | — | — |
| Aktiplast pp | — | — | — | — | — | — | — | — | — | — | 3 | 3 | 3 | 3 | 3 | — | — |
| Sulfur | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 |
| Vulcanization accelerator 1 (DPG) | 2.5 | 2.5 | 2 | 3 | 1 | 4.5 | 2.5 | 2.5 | 2.5 | 2.5 | 4.5 | 4.5 | 4.5 | 4.5 | 4.5 | 2.5 | 2.5 |
| Vulcanization accelerator 2 (CBS) | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |

| Evaluation results | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| 1st peak top temperature (°C) | -60 | -58 | -60 | -61 | -59 | -60 | -58 | -62 | -55 | -53 | -60 | -61 | -61 | -61 | -61 | -60 | -60 |
| 2nd peak top temperature (°C) | -10 | -6 | -11 | -10 | -10 | -11 | -10 | -11 | -10 | -10 | -11 | -10 | -10 | -10 | -10 | -10 | -10 |
| Grip performance on ice | 115 | 112 | 110 | 127 | 110 | 127 | 112 | 117 | 113 | 115 | 130 | 132 | 131 | 132 | 130 | 106 | 122 |
| Handling stability | 100 | 102 | 101 | 107 | 107 | 107 | 96 | 102 | 104 | 109 | 108 | 108 | 106 | 110 | 105 | 100 | 100 |
| Abrasion resistance | 117 | 114 | 108 | 105 | 111 | 105 | 108 | 135 | 133 | 127 | 117 | 135 | 134 | 136 | 137 | 122 | 101 |
| Average value of three properties | 110.7 | 109.3 | 106.3 | 113.0 | 109.3 | 113.0 | 105.3 | 118.0 | 116.7 | 117.0 | 118.3 | 125.0 | 123.7 | 126.0 | 124.0 | 109.3 | 107.7 |

Tables 1 and 2 show that the rubber compositions of the examples, each of which contained specific amounts of silica and a diene rubber gel containing a hydroxy group and having a glass transition temperature in a specific range and also contained a rubber component containing specific amounts of BR (a) and a diene rubber (b) (NR) that was other than the butadiene rubber (a) and had a glass transition temperature of -60°C or lower, were excellent in grip performance on ice, abrasion resistance, and handling stability (especially, grip performance on ice and abrasion resistance).

The rubber composition of Example 8, which contained a rare-earth BR (BR 3), had better grip performance on ice, abrasion resistance, and handling stability (especially, better abrasion resistance) than the rubber composition of Example 1. The rubber compositions of Examples 9 and 10, each of which contained a SBR (c), had better handling stability than the rubber composition of Example 8. The rubber composition of Example 11, which contained a fatty acid metal salt (Aktiplast pp), had better grip performance on ice, abrasion resistance, and handling stability (especially, better abrasion resistance) than the rubber composition of Example 6. The rubber compositions of Examples 12 to 15, each of which contained a rare-earth BR (BR 3) and a processing aid, had better grip performance on ice, abrasion resistance, and handling stability than the rubber compositions of the other examples.

In contrast, in Comparative Example 2 where the rubber composition contained a diene rubber gel with a glass transition temperature beyond the specific temperature range, the 1st peak and the 2nd peak overlapped each other, so that the two peak tops were not clearly detected. Thus, in comparison with the examples, the handling stability and the grip performance on ice were inferior and the effect of improving abrasion resistance was smaller.

In Comparative Example 3 where the amount of a diene rubber gel was less than the specific amount, the effects of improving the properties were smaller than in the examples. In Comparative Example 4 where the amount of a diene rubber gel was more than the specific amount, the handling stability was inferior to the examples.

In Comparative Example 5 where the amount of silica was less than the specific amount, the grip performance on ice was inferior to the examples. In Comparative Example 6 where the amount of silica was more than the specific amount, the viscosity was so high that the rubber composition was not kneadable.

In Comparative Example 8 where the amount of BR (a) was less than the specific amount and the amount of a diene rubber (b) (NR) was more than the specific amount, the grip performance on ice, abrasion resistance, and handling stability were greatly inferior to the examples.

Figs. 4(I) and 4(II) show the tan δ-temperature distribution curves of Comparative Example 2 where the amount of a diene rubber (b) was more than the specific amount and Example 1, respectively. Fig. 4(I) shows the tan δ-temperature distribution curves of the rubber composition of Comparative Example 2 and a rubber composition (referred to as Control in the figure) prepared by excluding the diene rubber gel from the rubber composition (i.e. the same rubber composition but containing no diene rubber gel). The tan δ peak (1st peak) assigned to the rubber component of the rubber composition of Comparative Example 2 was shifted to a lower temperature than that of the control rubber composition. The tan δ peak (2nd peak) assigned to the diene rubber gel thereof was detected, but the 2nd peak was a broad peak and its height was low.

On the other hand, Fig. 4(II) shows the tan δ-temperature distribution curves of the rubber composition of Example 1 and a rubber composition (referred to as Control in the figure) prepared by excluding the diene rubber gel from the rubber composition (i.e. the same rubber composition but containing no diene rubber gel). The 1st peak of the rubber composition of Example 1 was shifted to a lower temperature than that of the control rubber composition. The 2nd peak thereof was clearly detected and the height of the 2nd peak was high.

**Claims**

1. A rubber composition for a tire, comprising, per 100 parts by mass of a rubber component:

   10 to 150 parts by mass of silica and
   10 to 30 parts by mass of a diene rubber gel that contains a hydroxy group and has a glass transition temperature of -40°C to 0°C,
   the rubber component comprising, based on 100% by mass of the rubber component:

   (a) 30 to 90% by mass of butadiene rubber and
   (b) 10 to 60% by mass of a diene rubber that is other than the butadiene rubber (a) and has a glass transition temperature of -60°C or lower.

2. The rubber composition for a tire according to claim 1,
   wherein the diene rubber (b) is at least one of natural rubber and isoprene rubber.

3. The rubber composition for a tire according to claim 1 or 2,
   wherein the butadiene rubber (a) is a butadiene rubber synthesized in the presence of a rare-earth catalyst.

4. The rubber composition for a tire according to any one of claims 1 to 3, comprising a processing aid.

**5.** The rubber composition for a tire according to claim 4,
wherein the processing aid is at least one selected from the group consisting of fatty acid metal salts, amide esters, and mixtures of any of fatty acid metal salts with any of amide esters or fatty acid amides.

**6.** (added) The rubber composition for a tire according to any one of claims 1 to 5,
wherein in a tan $\delta$-temperature distribution curve drawn by plotting loss tangent (tan $\delta$) values of the rubber composition measured after vulcanization versus measurement temperature, two peaks, which are a tan $\delta$ peak assigned to the rubber component and a tan $\delta$ peak assigned to the diene rubber gel, are detected.

**7.** (added) The rubber composition for a tire according to claim 6,
wherein a peak top of the tan $\delta$ peak assigned to the diene rubber gel exists at -20°C to 0°C.

**8.** (amended) The rubber composition for a tire according to any one of claims 1 to 7,
wherein an amount of (c) a styrene-butadiene rubber having a glass transition temperature of lower than -20°C is 40% by mass or less based on 100% by mass of the rubber component, and
the diene rubber (b) is a diene rubber that is other than the rubbers (a) and (c) and has a glass transition temperature of -60°C or lower.

**9.** (amended) The rubber composition for a tire according to any one of claims 1 to 8,
wherein the diene rubber gel has an average particle size of 10 to 100 nm.

**10.** (amended) The rubber composition for a tire according to any one of claims 1 to 9, which is for use as at least one of a rubber composition for a cap tread and a rubber composition for a base tread.

**11.** (amended) A pneumatic tire, which is formed from the rubber composition according to any one of claims 1 to 10.

**12.** (amended) The pneumatic tire according to claim 11,
which is a winter tire or a studless winter tire.

**Patentansprüche**

**1.** Kautschukzusammensetzung für einen Reifen enthaltend, bezogen auf 100 Massenteile der Kautschukkomponente:

10 bis 150 Massenteile Silica und
10 bis 30 Massenteile eines Dienkautschukgels, welches eine Hydroxygruppe enthält und eine Glasübergangstemperatur von -40°C bis 0°C aufweist,
wobei die Kautschukkomponente, bezogen auf 100 Massen-% der Kautschukkomponente, enthält:

(a) 30 bis 90 Massen-% Butadienkautschuk und
(b) 10 bis 60 Massen-% eines Dienkautschuks, welcher verschieden von dem Butadienkautschuk (a) ist und eine Glasübergangstemperatur von -60°C oder weniger aufweist.

**2.** Kautschukzusammensetzung für einen Reifen nach Anspruch 1,
wobei der Dienkautschuk (b) wenigstens einer von Naturkautschuk und Isoprenkautschuk ist.

**3.** Kautschukzusammensetzung für einen Reifen nach Anspruch 1 oder 2,
wobei der Butadienkautschuk (a) ein Butadienkautschuk ist, welcher in der Gegenwart eines Seltenerdkatalysators synthetisiert worden ist.

**4.** Kautschukzusammensetzung für einen Reifen nach einem der Ansprüche 1 bis 3, welcher eine Verarbeitungshilfe enthält.

**5.** Kautschukzusammensetzung für einen Reifen nach Anspruch 4,
wobei die Verarbeitungshilfe wenigstens eine ist, die aus der Gruppe ausgewählt ist, welche besteht aus Fettsäuremetallsalzen, Amidestern und Mischungen von irgendeinem Fettsäuremetallsalz mit einem Amidester oder Fettsäureamiden.

**6.** (zugefügt) Kautschukzusammensetzung für einen Reifen nach einem der Ansprüche 1 bis 5, wobei in der tan $\delta$-Temperaturverteilungskurve, welche durch Auftragen von Werten des Verlusttangens (tan $\delta$) der Kautschukzusammensetzung, welche nach der Vulkanisation gemessen worden sind, gegenüber der Messtemperatur erhalten worden ist, zwei Peaks detektiert werden, welche ein der Kautschukkomponente zugeordneter tan $\delta$-Peak und ein dem Dienkautschukgel zugeordneter tan $\delta$-Peak sind.

**7.** (zugefügt) Kautschukzusammensetzung für einen Reifen nach Anspruch 6, wobei die Peakspitze des tan $\delta$-Peaks, welche dem Dienkautschukgel zugeordnet ist, bei -20°C bis 0°C liegt.

**8.** (geändert) Kautschukzusammensetzung für einen Reifen nach einem der Ansprüche 1 bis 7, wobei die Menge von (c) Styrolbutadienkautschuk mit einer Glasübergangstemperatur von weniger als -20°C 40 Massen-% oder weniger bezogen auf 100 Massen-% der Kautschukkomponente beträgt und der Dienkautschuk (b) ein Dienkautschuk ist, welcher von den Kautschuken (a) bis (c) verschieden ist und eine Glasübergangstemperatur von -60°C oder weniger aufweist.

**9.** (geändert) Kautschukzusammensetzung für einen Reifen nach einem der Ansprüche 1 bis 8, wobei das Dienkautschukgel eine durchschnittliche Partikelgröße von 10 bis 100 nm aufweist.

**10.** (geändert) Kautschukzusammensetzung für einen Reifen nach einem der Ansprüche 1 bis 9, welcher zur Verwendung von wenigstens einer Kautschukzusammensetzung für eine Decklauffläche und einer Kautschukzusammensetzung für eine Grundlauffläche ist.

**11.** (geändert) Luftreifen, welcher aus einer Kautschukzusammensetzung nach einem der Ansprüche 1 bis 10 gebildet worden ist.

**12.** (geändert) Luftreifen nach Anspruch 11, welcher ein Winterreifen oder ein spikeloser Winterreifen ist.

**Revendications**

**1.** Composition de caoutchouc pour un pneu, comprenant, pour 100 parties en masse d'un constituant d'un caoutchouc :

de 10 à 150 parties en masse de silice et
de 10 à 30 parties en masse d'un gel de caoutchouc de diène qui contient un groupe hydroxy et présente une température de transition vitreuse de -40°C à 0°C,
le constituant de caoutchouc comprenant, rapporté à 100 % en masse du constituant de caoutchouc :

(a) de 30 à 90 % en masse de caoutchouc de butadiène et
(b) de 10 à 60 % en masse d'un caoutchouc de diène qui est différent du caoutchouc de butadiène (a) et présente une température de transition vitreuse de -60°C ou inférieure.

**2.** Composition de caoutchouc pour un pneu selon la revendication 1, dans laquelle le caoutchouc de diène (b) est au moins un d'un caoutchouc naturel et d'un caoutchouc d'isoprène.

**3.** Composition de caoutchouc pour un pneu selon la revendication 1 ou 2, dans laquelle le caoutchouc de butadiène (a) est un caoutchouc de butadiène synthétisé en présence d'un catalyseur de terre rare.

**4.** Composition de caoutchouc pour un pneu selon l'une quelconque des revendications 1 à 3, comprenant un auxiliaire de traitement.

**5.** Composition de caoutchouc pour un pneu selon la revendication 4, dans laquelle l'auxiliaire de traitement est au moins un choisi dans le groupe constitué de sels de métaux d'acides gras, d'esters d'amides et de mélanges de l'un quelconque des sels de métaux d'acides gras avec l'un quelconque des esters d'amides ou des amides d'acides gras.

**6.** Composition de caoutchouc pour un pneu selon l'une quelconque des revendications 1 à 5, dans laquelle dans une courbe de distribution tan $\delta$-température tirée en traçant les valeurs de perte de tangente

(tan $\delta$) de la composition de caoutchouc mesurées après vulcanisation en fonction de la température de mesure, deux pics, lesquels sont un pic tan $\delta$ attribué au constituant de caoutchouc et un pic tan $\delta$ attribué au gel de caoutchouc de diène, sont détectés.

**7.** Composition de caoutchouc pour un pneu selon la revendication 6,
dans laquelle un haut de pic du pic tan $\delta$ attribué au gel de caoutchouc de diène existe à de -20°C à 0°C.

**8.** Composition de caoutchouc pour un pneu selon l'une quelconque des revendications 1 à 7,
dans laquelle une quantité de (c) un caoutchouc de styrène-butadiène présentant une température de transition vitreuse inférieure à -20°C est de 40 % en masse ou inférieure rapportée à 100 % en masse du constituant de caoutchouc, et
le caoutchouc de diène (b) est un caoutchouc de diène qui est différent des caoutchoucs (a) et (c) et présente une température de transition vitreuse de -60°C ou inférieure.

**9.** Composition de caoutchouc pour un pneu selon l'une quelconque des revendications 1 à 8, dans laquelle le gel de caoutchouc de diène présente une taille moyenne de particule de 10 à 100 nm.

**10.** Composition de caoutchouc pour un pneu selon l'une quelconque des revendications 1 à 9, laquelle est destinée à une utilisation comme au moins une d'une composition de caoutchouc pour une bande de roulement de chape et d'une composition de caoutchouc pour une bande de roulement de base.

**11.** Pneumatique, lequel est formé à partir de la composition de caoutchouc selon l'une quelconque des revendications 1 à 10.

**12.** Pneumatique selon la revendication 11,
lequel est un pneu neige ou un pneu neige non clouté.

FIG.1

50nm

# FIG.2

(I)

(II)

## FIG.3

Diene rubber gel

BR

NR

## FIG.4

(I)

(II)

**REFERENCES CITED IN THE DESCRIPTION**

**Patent documents cited in the description**

- US 20080149248 A1
- WO 2010084114 A1
- US 2010152370 A1
- US 20100197829 A1
- US 20080149245 A1
- US 20080114108 A1
- JP 2006089552 A
- JP 2010111753 A
- JP 3739198 B
- JP 3299343 B
- JP 2004504465 T
- JP 2004506058 T